# EUROPÄISCHE PATENTSCHRIFT

(11) **EP 4 381 211 B1**
(45) Veröffentlichungstag und Bekanntmachung des Hinweises auf die Patenterteilung: **02.07.2025**
(21) Anmeldenummer: 23757206.0
(22) Anmeldetag: 08.08.2023
(51) Int. Cl.: F16K 31/04, F16K 31/50

(54) **VENTILANTRIEBSVORRICHTUNG**
VALVE DRIVE DEVICE
DISPOSITIF D'ENTRAÎNEMENT DE SOUPAPE

(30) Priorität: 18.08.2022 DE 102022120844; 30.11.2022 DE 102022131755; 23.02.2023 DE 102023104499
(43) Veröffentlichungstag der Anmeldung: 12.06.2024
(73) Patentinhaber: ECO Holding 1 GmbH, 97828 Marktheidenfeld (DE)
(72) Erfinder: MAISCH, Dieter, 72664 Kohlberg (DE); WEBER, Hartmut, 72655 Altdorf (DE)
(74) Vertreter: Keller Schneider Patentanwaltsgesellschaft mbH
(86) Internationale Anmeldenummer: PCT/EP2023/071915
(87) Internationale Veröffentlichungsnummer: WO 2024/037933

(56) Entgegenhaltungen:
- WO-A1-2004/038269
- DE-A1- 10 058 441
- JP-A- 2021 001 687
- US-A- 5 060 910
- US-A1- 2021 172 541

## Beschreibung

### Technisches Gebiet

Die Erfindung betrifft eine Ventilantriebsvorrichtung mit einem Basiselement, einer Hubstange zum Antrieb eines Ventilkörpers, wobei die Hubstange in Bezug auf das Basiselement entlang ihrer Längsachse zwischen einer ersten Endposition und einer von der ersten Endposition abweichenden zweiten Endposition translatorisch und rotationslos bewegbar ist. Zudem umfasst die Ventilantriebsvorrichtung einen um die Längsachse (L) drehbaren Rotor zum Antrieb der Hubstange, wobei eine Drehbewegung des Rotors durch eine Übersetzungseinrichtung in die translatorische und rotationslose Bewegung der Hubstange überführbar ist.

Des Weiteren betrifft die vorliegende Erfindung ein Ventil zur Absperrung und/oder Steuerung des Durchflusses von Fluiden, wobei das Ventil einen Ventilkörper umfasst, der innerhalb eines Ventilgehäuses zwischen einer vollständig geschlossenen Position und einer vollständig geöffneten Position überführbar ausgebildet ist und ein Verfahren zur Herstellung einer Ventilantriebsvorrichtung.

### Stand der Technik

Im Stand der Technik bekannte Ventilantriebsvorrichtungen verfügen meist über Betätigungsspindeln, die durch einen Antrieb in Rotation versetzt werden. Mittels eines Gewindes wird die Rotation der Betätigungsspindel in eine Translation überführt, um einen Ventilkörper zwischen einer geschlossenen und einer geöffneten Position zu überführen. Dadurch ergeben sich eine Reihe von Nachteilen. Beispielsweise muss zwischen der Betätigungsspindel und dem Ventilkörper eine Drehentkopplung eingebaut werden, um zu verhindern, dass sich die Betätigungsspindel und der Ventilkörper bei großem Drehmoment in dem Dichtsitz festklemmen. Um den Verschleiß zwischen Betätigungsspindel und Ventilkörper zu reduzieren, muss zusätzlich mindestens eine Gleitscheibe berücksichtigt werden, welche die Auflageflächen und die Reibung zwischen Betätigungsspindel und Ventilkörper minimiert. Ein weiterer Nachteil ergibt sich aufgrund der Tatsache, dass sich die Betätigungsspindel einschließlich des Rotors in axialer Richtung relativ zu dem Stator bewegt. Der Stator muss trotz dieser axialen Relativbewegung dazu ausgebildet sein, ein ausreichendes Maß an Drehmoment auf den Rotor zu übertragen zu können.

DE 100 58 441 A1 offenbart eine Ventilantriebsvorrichtung nach dem Oberbegriff des Patentanspruchs 1. Ähnliche Ventilantriebsvorrichtungen sind zudem aus US 5,060,910 A, WO 2004/038269 A1, JP 2021 001687 A und US 2021/172541 A1 bekannt.

### Darstellung der Erfindung

Aufgabe der Erfindung ist es, eine dem eingangs genannten technischen Gebiet zugehörende Ventilantriebsvorrichtung zu schaffen, welche die Nachteile aus dem Stand der Technik zumindest teilweise überwindet. Insbesondere ist es die Aufgabe der vorliegenden Erfindung ein verbessertes Konzept einer Ventilantriebsvorrichtung bereitzustellen.

Die Lösung der Aufgabe ist durch die Merkmale des Anspruchs 1 definiert. Die erfindungsgemäße Ventilantriebsvorrichtung umfasst ein Basiselement, eine Hubstange zum Antrieb eines Ventilkörpers, wobei die Hubstange in Bezug auf das Basiselement entlang ihrer Längsachse zwischen einer ersten Endposition und einer von der ersten Endposition abweichenden zweiten Endposition translatorisch und rotationslos bewegbar ist. Zusätzlich umfasst die erfindungsgemäße Ventilantriebsvorrichtung einen um die Längsachse drehbaren Rotor zum Antrieb der Hubstange, wobei eine Drehbewegung des Rotors durch eine Übersetzungseinrichtung in die translatorische und rotationslose Bewegung der Hubstange überführbar ist. Des Weiteren umfasst die Ventilantriebsvorrichtung eine Drehbegrenzungseinrichtung zum Begrenzen der Drehbewegung des Rotors zwischen einem ersten Endanschlag und einem zweiten Endanschlag, wobei sich die Hubstange in der ersten Endposition befindet, wenn sich der Rotor in den ersten Endanschlag gedreht hat, und sich die Hubstange in der zweiten Endposition befindet, wenn sich der Rotor in den zweiten Endanschlag gedreht hat.

Dadurch wird beispielsweise der technische Vorteil erreicht, dass die Hubstange ausschließlich translatorisch und vollständig rotationslos bewegbar ausgebildet ist. Dadurch ist es nicht notwendig eine Drehentkopplung zwischen Ventilkörper und Hubstange anzuordnen. Zusätzlich braucht keine Gleitscheibe angeordnet zu werden, weil sich das Ausmaß an Verschleiß, aufgrund der nichtvorhandenen Relativbewegung der Bauteile zueinander deutlich reduziert. Mit anderen Worten wird die Einsatzdauer der Ventilantriebsvorrichtung und damit die Einsatzdauer des gesamten Ventils verlängert.

Nach einer weiteren Ausführungsform ist die Drehbegrenzungseinrichtung zumindest abschnittsweise radial zwischen der Hubstange und dem Rotor angeordnet. Dadurch wird beispielsweise der technische Vorteil erreicht, dass die Ventilantriebsanordnung und damit das gesamte Ventil besonders kompakt und platzsparend ausgebildet werden kann.

Erfindungsgemäß weist die Drehbegrenzungseinrichtung eine Anschlaghülse und einen Mitnehmer auf, wobei der Mitnehmer zwischen der Anschlaghülse und dem Rotor angeordnet ist, der Mitnehmer drehfest und verschiebebeweglich mit dem Rotor verbunden ist, und die Anschlaghülse eine Kulissenbahn zum Führen des Mitnehmers aufweist. Dadurch wird beispielsweise der technische Vorteil erreicht, dass die Drehbegrenzungseinrichtung ein Bewegungsintervall für den Rotor definiert, wodurch die Einsatzdauer der Ventilantriebsvorrichtung und damit die Einsatzdauer des gesamten Ventils verlängert wird. Ein weiterer technischer Vorteil lieg darin begründet, dass der Rotor selbst keine axiale Bewegung relativ zu dem Stator durchführt. Die Drehbegrenzungseinrichtung kompensiert die axiale Bewegung, indem der Mitnehmer die axiale Bewegung vollzieht. Der Mitnehmer ist gegenüber dem Rotor ausschließlich in Längsrichtung beweglich. Mit anderen Worten ist eine Drehmomentübertragung vom Rotor auf den Mitnehmer möglich. Somit wird ein Drehmoment vom Stator auf den Rotor und damit unmittelbar auf den Mitnehmer übertragen. Der Mitnehmer wird durch das Drehmoment durch die Kulissenbahn der Anschlaghülse bewegt. Die Axialbewegung der Hubstange wird durch die Übersetzungseinrichtung bewirkt, während die Drehbegrenzungseinrichtung mit dem Mitnehmer und der Anschlaghülse die erste Endposition und die zweite Endposition der Hubstange definieren, wobei der Rotor immer in einer axial unveränderten Position verbleibt. Dies verbessert zusätzlich die kompakte Bauform der Ventilantriebsvorrichtung und ermöglicht eine optimale Drehmomentübertragung zwischen Stator und Rotor. Der Rotor kann somit in Axialrichtung deutlich kompakter ausgebildet werden.

Um eine axiale Bewegung des Rotors zu verhindern, bewirkt eine Drehbewegung des Rotors eine Drehbewegung des Mitnehmers um die Anschlaghülse und der Mitnehmer wird innerhalb Kulissenbahn bewegt. Dadurch wird beispielsweise der technische Vorteil erreicht, dass die Drehbegrenzungseinrichtung mit dem in Axialrichtung verschiebebeweglichem Mitnehmer und dem Eingriff des Mitnehmers in die Kulissenbahn eine unmittelbare Relativbewegung zwischen Mitnehmer und Rotor sowie zwischen Mitnehmer und Kulissenbahn bewirkt. Eine axiale Bewegung zwischen Rotor und Stator findet somit nicht statt.

Nach einer besonders bevorzugten Ausführungsform ist die Kulissenbahn als helixförmige Nut in der Anschlaghülse ausgebildet und der Mitnehmer weist einen ersten Vorsprung auf, der in die helixförmige Nut der Anschlaghülse eingreifend angeordnet ist. Dadurch wird beispielsweise der technische Vorteil erreicht, dass der Mitnehmer über den ersten Vorsprung möglichst reibungsfrei in der Kulissenbahn gleiten kann. Durch die helixförmige Ausbildung der Kulissenbahn ist eine regelmäßige und kontinuierliche Bewegung des Mitnehmers in der Kulissenbahn möglich. Dadurch entsteht ein unmittelbarer und proportionaler Bewegungszusammenhang zwischen axialer Position der Hubstange und Position des Mitnehmers innerhalb der Kulissenbahn. Zusätzlich ist es jedoch auch möglich, die Kulissenbahn mit Abschnitten unterschiedlicher Steigungen zu versehen. Beispielsweise kann die Kulissenbahn in den Endabschnitten mit einer geringeren Steigung versehen werden, wodurch sich ein geringeres Loslaufdrehmoment realisieren lässt.

Um die vollständig zurückgezogene Position der Hubstange im Sinne eines ersten Endanschlags und die vollständig ausgefahrene Position der Hubstange im Sinne eines zweiten Endanschlags festzulegen, weist die Kulissenbahn ein erstes I<ulissenbahnende und ein zweites I<ulissenbahnende auf. Das erste I<ulissenbahnende definiert den ersten Endanschlag für den Rotor und das zweite I<ulissenbahnende definiert den zweiten Endanschlag für den Rotor. Dadurch wird beispielsweise der technische Vorteil erreicht, dass ein einfaches und eindeutiges Bewegungsintervall der Hubstange vorgegeben werden kann. Beim Erreichen des ersten Endanschlags ist das Ventil vollständig geöffnet, wodurch die Hubstange nicht weiter zurückgezogen werden kann.

Beim Erreichen des zweiten Endanschlags ist das Ventil vollständig geschlossen, wodurch der Ventilkörper vollständig im Ventilsitz anliegt. Die Endanschläge verhindern jeweils durch einen mechanischen Anschlag, dass trotz anliegenden Drehmoments keine weitere Axialbewegung möglich ist, wodurch ein Verklemmen der Bauteile durch Selbsthemmung verhindert wird. Ein weiterer besonderer Vorteil ergibt sich durch die vereinfachte Anpassbarkeit der Ventilantriebsvorrichtung an vorgegebene Rahmenbedingungen. Die Anschlaghülse kann mit wenig Aufwand ausgetauscht werden, wodurch auch die Endanschläge in Abhängigkeit des Anwendungsfalls angepasst werden können.

Gemäß einer weiteren bevorzugten Ausführungsform ist die Anschlaghülse drehfest mit dem Basiselement verbunden. Vorzugsweise ist die Anschlaghülse in Bezug auf das Basiselement verdrehgesichert angeordnet. Dadurch wird beispielsweise der technische Vorteil erreicht, dass mit sehr einfachen Mitteln eine rotationsmäßige Relativbewegung zwischen der Hubstange und der Anschlaghülse nicht möglich ist. Dies stellt einerseits die Funktion und andererseits eine einfache Montage der Ventilantriebsvorrichtung sicher.

Nach einer besonders bevorzugten Ausführungsform ist die Hubstange drehfest und verschiebebeweglich im dem Basiselement angeordnet. Insbesondere im Zusammenspiel mit der vorhergehenden Ausführungsform, nach welcher die Anschlaghülse ebenfalls in Bezug auf das Basiselement verdrehgesichert angeordnet ist, können Fertigungstoleranzen unter den einzelnen Bestandteilen kompensiert und eine präzise Positionierung der Hubstange erreicht werden.

Um eine axiale Bewegung des Rotors gegenüber dem Stator zu verhindern, weist der Rotor ein Führungselement auf, wobei der Mitnehmer über das Führungselement drehfest und verschiebebeweglich mit dem Rotor verbunden ist. Dadurch wird beispielsweise der technische Vorteil erreicht, dass eine axiale Bewegungskraft des Rotors durch den Mitnehmer kompensiert wird. Beispielsweise umfasst das Führungselement eine axial ausgerichtete Nut an der Innenwand des Rotors. Somit ist der Mitnehmer gegenüber dem Rotor ausschließlich in Längsrichtung beweglich und kann entlang der Nut am Rotor entlanggleiten. Dadurch ist lediglich eine Drehmomentübertragung vom Rotor auf den Mitnehmer möglich, wobei der Mitnehmer durch das Drehmoment durch die Kulissenbahn der Anschlaghülse hindurchbewegt wird. Hierbei umfasst der Mitnehmer einen zweiten Vorsprung, welcher in die Kulissenbahn eingreift und weitestgehend reibungsfrei gleiten kann.

Gemäß einer weiteren bevorzugten Ausführungsform weist die Hubstange in Längsrichtung ein Steuerende zum Steuern des Ventilkörpers auf und die Übersetzungseinrichtung ist an einem dem Steuerende gegenüberliegenden Ende der Hubstange angeordnet. Dadurch wird beispielsweise der technische Vorteil erreicht, dass das Steuerende ausschließlich zur präzisen Übertragung einer axialen Bewegung auf den Ventilkörper ausgebildet ist. Beispielsweise trägt das Steuerende ein Federelement, um den Ventilkörper mit einer definierten Vorspannkraft in das Ventilkopflager zu drücken. Die Übersetzungseinrichtung umfasst ein Innengewinde, welches die Rotationsbewegung des Rotors in eine translatorische Bewegung der Hubstange überführt. Durch das Anordnen des Steuerendes auf der Gegenseite der Übersetzungseinrichtung entsteht eine räumliche Trennung zwischen mechanischer Übertragung von Rotation zu Translation und präziser axialer Positionierung des Ventilkörpers. Durch die Trennung wird einerseits eine vereinfachte Montage und andererseits ein reduzierter Verschleiß am Ventilkörper erreicht. Dies erhöht die Einsatzdauer der Ventilantriebsvorrichtung.

Nach einer weiteren besonders bevorzugten Ausführungsform ist die Hubstange in Bezug auf einen zu steuernden Ventilkörper vorspannbar gelagert. Dadurch wird beispielsweise der technische Vorteil erreicht, dass der Ventilkörper mit einer definierten Vorspannkraft in den Ventildichtsitz gedrückt werden kann. Beispielsweise ist zwischen Hubstange und Ventilkörper ein Federelement gelagert. Dadurch wird die Dichtigkeit des Ventils erhöht und der Verschleiß wird gleichzeitig reduziert. Zusätzlich wird ein Verklemmen oder eine Selbsthemmung des Ventilkörpers verhindert.

Um einen besonders kompakten und platzsparenden Antrieb zum Betätigen der Ventilantriebsvorrichtung bereitzustellen, weist die Ventilantriebsvorrichtung einen Schrittmotor auf, wobei der Schrittmotor einen Stator und den Rotor umfasst, und der Stator den Rotor zumindest abschnittsweise ummantelt und über den Stator die Drehbewegung des Rotors steuerbar ist.

Gemäß einer besonders vorteilhaften Ausführungsform ist eine axiale Ausrichtung des Stators in Bezug auf den Rotor während einer Drehbewegung des Rotors zwischen dem ersten Endanschlag und dem zweiten Endanschlag unveränderlich ausgebildet. Dadurch wird beispielsweise der technische Vorteil erreicht, dass die kompakte Bauform der Ventilantriebsvorrichtung verbessert und eine optimale Drehmomentübertragung zwischen Stator und Rotor ermöglicht wird. Der Rotor kann somit in Axialrichtung deutlich kompakter ausgebildet werden.

Nach einer weiteren Ausführungsform weist die Hubstange in Längsrichtung ein Steuerende zum Steuern des Ventilkörpers auf und die Übersetzungseinrichtung ist zwischen dem Steuerende und der Anschlaghülse angeordnet. Dadurch wird beispielsweise der technische Vorteil erreicht, dass die gesamte Ventilantriebsvorrichtung in Längsrichtung kompakter ausgebildet werden kann. Beispielsweise kann die Übersetzungseinheit einteilig mit der Hubstange ausgebildet sein. Insgesamt kann die Hubstange kürzer ausgebildet werden, wobei die Hubstange lediglich über das Steuerende gelagert werden muss. Dies reduziert die Herstellungskosten und reduziert zusätzlich die Ansprüche an Geometrie- und Toleranzvorgaben. Die Übersetzungseinrichtung kann beispielsweise einstückig mit der Hubstange ausgebildet sein.

Gemäß einer zusätzlichen vorteilhaften Ausführungsform weist die Ventilantriebsvorrichtung ein Deckelelement auf, welches mit der Anschlaghülse über einen Eingriff drehfest verbunden ist. Dadurch wird beispielsweise der technische Vorteil erreicht, dass die Anschlaghülse sehr einfach mit dem Deckelelement und damit drehfest in Bezug auf den Rotor fixiert werden kann. Beispielsweise ist der Eingriff längsbeweglich ausgebildet, wodurch ein Toleranzausgleich in Längsrichtung möglich ist. Insgesamt ist eine vereinfachte Montage der Ventilantriebsvorrichtung möglich.

Nach einer zusätzlichen Ausführungsform ist der Rotor über ein Wälzlager an dem Basiselement gelagert. Dadurch wird beispielsweise der technische Vorteil erreicht, dass der Rotor präzise axial und radial gelagert ist und die Montage der gesamten Ventilantriebsvorrichtung deutlich vereinfacht wird. Das Wälzlager gibt der Ventilantriebsvorrichtung ein hohes Maß an Stabilität, weshalb sich eine Reduzierung der Fertigungstoleranzen alle verbleiben Bauteile ergibt. Insgesamt wird die Ventilantriebsvorrichtung billiger in der Herstellung und ist leichter zu montieren und hat eine sehr stark reibungsreduzierte Lagerung.

Gemäß einer besonders vorteilhaften Ausführungsform umfasst die Ventilantriebsvorrichtung eine tiefgezogene Abdeckhülse, welche fest mit dem Basiselement verbunden ist, wobei der Rotor und die Drehbegrenzungseinrichtung) vorzugsweise vollständig in der Abdeckhülse aufgenommen sind. Dadurch wird beispielsweise der technische Vorteil erreicht, dass die Ventilantriebsvorrichtung nach außen abgeschlossen ist und in der Abdeckhülse geschützt ist. Die tiefgezogene Abdeckhülse ist besonders einfach herstellbar und leicht zu montieren.

Um die Montage der Ventilantriebsvorrichtung zusätzlich zu vereinfachen und um ein Verdrehen der Anschlaghülse im Betrieb der Ventilantriebsvorrichtung zu verhindern, weist die Abdeckhülse einen Hülsenfortsatz zum Eingriff in die Anschlaghülse auf, wobei der Hülsenfortsatz dazu ausgebildet ist, die Anschlaghülse gegenüber der Abdeckhülse zumindest drehfest zu fixieren. Durch die feste Verbindung der Abdeckhülse mit dem Basisteil wird indirekt eine Verdrehsicherung der Abdeckhülse gegenüber dem Basisteil sichergestellt. Beispielsweise kann der Hülsenfortsatz fester Bestandteil der Abdeckhülse sein. Somit kann der Hülsenfortsatz bei Tiefziehen der Abdeckhülse berücksichtigt und im selben Arbeitsschritt hergestellt werden. Beispielsweise ist der Hülsenfortsatz in seinem Längsquerschnitt in Form eines Dreiflachs ausgebildet, um die Drehsicherung der Anschlaghülse sicherzustellen. Alternativ ist aber jede andere geeignete Querschnittsform denkbar, die Aufgaben der formschlüssigen Drehsicherung zu erfüllen.

Nach einer besonders bevorzugten Ausführungsform umfasst das Basiselement ein Führungsmittel, wobei das Führungsmittel dazu ausgebildet ist, die Hubstange entlang einer Längskontur axial zu führen. Dadurch wird beispielsweise der technische Vorteil erreicht, dass eine rein translatorische Bewegung der Hubstange sichergestellt werden kann. Durch die rein translatorische Bewegung der Hubstange braucht keine Drehentkopplung zwischen Ventilkörper und Hubstange eingesetzt werden. Zusätzlich braucht es keine Gleitscheibe mehr, weil sich das Ausmaß an Verschleiß, aufgrund der nichtvorhandenen Relativbewegung der Bauteile zueinander reduziert. Insgesamt wird die Einsatzdauer der Ventilantriebsvorrichtung und damit die Einsatzdauer des gesamten Ventils zusätzlich verlängert. Zusätzlich werden Verunreinigungen durch Abtrieb vermieden. Beispielsweise umfasst das Führungsmittel eine Führungsscheibe, welche innerhalb des Basiselements angeordnet und drehsicher gegenüber dem Basiselement verbaut werden kann. Die Hubstange erstreckt sich durch die Führungsscheibe hindurch und die Längskontur der Hubstange liegt in einer radial angeordneten Führungskerbe der Führungsscheibe. Alternativ kann die Führungskerbe auch als Führungsnase bezeichnet werden.

Gemäß einer Alternative der vorliegenden Erfindung ist die Lösung der Aufgabe durch die Merkmale des Anspruchs 11 definiert. Die alternative Lösung umfasst ein Ventil zur Absperrung und/oder Steuerung des Durchflusses von Fluiden. Das Ventil umfasst einen Ventilkörper, der innerhalb eines Ventilgehäuses zwischen einer vollständig geschlossenen Position und einer vollständig geöffneten Position überführbar ausgebildet ist. Zusätzlich umfasst das Ventil eine Ventilantriebsvorrichtung nach einem der vorhergehenden Ansprüche, wobei die Position des Ventilkörpers durch die Hubstange der Ventilantriebsvorrichtung steuerbar ist.

Die Vorteile dieser Alternative sind mit denjenigen der vorausgehenden Ausführungsform vergleichbar. Insbesondere wird der technische Vorteil erreicht, dass die Hubstange ausschließlich translatorisch und vollständig rotationslos bewegbar ausgebildet ist, wodurch es nicht mehr notwendig ist, eine Drehentkopplung zwischen Ventilkörper und Hubstange anzuordnen. Ebenso benötigt es keine Gleitscheibe, weil sich das Ausmaß an Verschleiß deutlich reduziert. Ein weiterer Vorteil liegt in der geschlossenen Hülse begründet, welche die Robustheit verbessert und die Anzahl der Bauteile reduziert. Mit anderen Worten kann die Einsatzdauer des Ventils verlängert werden.

Es können unterschiedliche Ventiltypen mit der erfindungsgemäßen Ventilantriebsvorrichtung kombiniert werden. Beispielsweise kann das Ventil auch zwei geschlossene Endstellungen aufweisen.

Bei einer beispielhaften Weiterbildung weist das Ventil ein Dichtelement auf. Das Dichtelement kann am und/oder zumindest abschnittsweise im Ventilkörper angeordnet sein. Vorzugsweise ist das Dichtelement dazu ausgebildet, mit einem Dichtsitz des Ventilgehäuses fluiddicht in Kontakt gebracht zu werden. Dies kann insbesondere dann der Fall sein, wenn sich der Ventilkörper in der vollständig geschlossenen Position befindet. Das Dichtelement kann beispielsweise ein Dichtring sein. Wenn das Dichtelement fluiddicht mit dem Dichtsitz in Kontakt steht, ist vorzugsweise keine oder zumindest nur eine vernachlässigbar geringe Fluidströmung zwischen dem Dichtelement und dem Dichtsitz möglich. Das Ventil, insbesondere der Ventilkörper, kann auch mehrere Dichtelemente aufweisen.

Ein Dichtelement bewirkt vorteilhafterweise, dass eine Fluidströmung besonders wirkungsvoll unterbunden werden kann, wenn sich der Ventilkörper in der vollständig geschlossenen Position befindet.

Bei einer weiteren beispielhaften Ausführungsform des Ventils weist das Ventilgehäuse einen ersten Dichtsitz und einen zweiten Dichtsitz, insbesondere einen vom ersten Dichtsitz verschiedenen zweiten Dichtsitz, auf. Beispielsweise kann der erste Dichtsitz in Bezug auf die Längsachse des Ventils in axialer Richtung vom zweiten Dichtsitz beabstandet sein. Vorzugsweise sind der erste Dichtsitz und der zweite Dichtsitz zueinander gegenüberliegend angeordnet. Die beiden Dichtsitze können identisch oder jeweils unterschiedlich geformt sein. Vorzugsweise ist der Ventilkörper zwischen dem ersten Dichtsitz und dem zweiten Dichtsitz überführbar, insbesondere hin und her überführbar.

Eine Ausführungsform des Ventils mit einem ersten Dichtsitz und einem zweiten Dichtsitz bewirkt vorteilhafterweise, dass das Ventil, insbesondere der Ventilkörper des Ventils, zwischen zwei unterschiedlichen vollständig geschlossenen Positionen, insbesondere zwischen einer ersten vollständig geschlossenen Position und einer zweiten vollständig geschlossenen Position überführbar ist. Vorzugsweise kann der Ventilkörper zwischen den zwei vollständig geschlossenen Positionen die vollständig geöffnete Position einnehmen. Dies hat den Vorteil, dass das Ventil als 3/2 Wegeventil ausgeführt sein kann.

Das Ventil kann bei einer weiteren beispielhaften Ausführungsform ein Federelement aufweisen. Vorzugsweise ist das Federelement eine Spiralfeder. Das Federelement kann in Bezug auf die Längsachse in axialer Richtung zwischen der Hubstange und dem Ventilkörper angeordnet sein. Dadurch kann eine Federkraft des Federelements auf die Hubstange und/oder den Ventilkörper wirken.

Das Federelement bewirkt vorteilhafterweise, dass der Ventilkörper mit einer vordefinierten Kraft, insbesondere einer vordefinierten Federkraft des Federelements, in die vollständig geschlossene Position gedrückt und/oder gezogen werden kann. Dadurch kann eine besonders hohe Dichtwirkung erzielt werden.

Alternativ oder zusätzlich kann das Federelement innerhalb einer Federkammer des Ventilkörpers angeordnet sein. Die Federkammer kann ein Hohlraum innerhalb des Ventilkörpers sein. Vorzugsweise erstreckt sich die Hubstange zumindest abschnittsweise in die Federkammer des Ventilkörpers hinein. Ein derartiger Aufbau des Ventils bewirkt vorteilhafterweise, dass die Ventilantriebsvorrichtung und das Ventil gemeinsam eine besonders kompakte Bauform aufweisen können.

Bei einer vorteilhaften Weiterbildung der vorgenannten Ausführungsform des Ventils, ist das Federelement dazu ausgebildet, den Ventilkörper in den ersten Dichtsitz zu drücken. Vorzugsweise ist das Federelement ferner dazu ausgebildet, den Ventilkörper in den zweiten Dichtsitzt zu drücken. Eine derartige Weiterbildung bewirkt vorteilhafterweise, dass der Ventilkörper immer mit einer vordefinierten Kraft am ersten Dichtsitz oder am zweiten Dichtsitz anliegt. Dadurch kann eine besonders hohe Dichtwirkung erzielt werden. Der Hub wird durch Erreichen des Endanschlags in der Kulisse beendet. Je nach Toleranzlage wird dabei die Feder etwas mehr oder weniger vorgespannt, jedoch variiert dabei das Kraftniveau in einem sehr geringen Bereich. Dadurch ist die Schließkraft des Dichtsitzes definiert und variiert nur in sehr kleinen Grenzen.

Bei einer weiteren beispielhaften Ausführungsform weist das Ventil ein Kraftübertragungsmittel auf. Das Kraftübertragungsmittel ist vorzugsweise derart ausgebildet und/oder angeordnet, dass das Federelement in Abhängigkeit von der Position der Hubstange entweder mit der Hubstange oder dem Ventilkörper kraftübertragend verbunden ist. Beispielsweise kann die Hubstange über das Kraftübertragungsmittel eine Druckkraft auf das Federelement ausüben, wenn sich die Hubstange in der ersten Endposition befindet. Wenn sich die Hubstange in der zweiten Endposition befindet, kann das Federelement über das Kraftübertragungsmittel eine Druckkraft auf den Ventilkörper ausüben. Vorzugsweise ist das Kraftübertragungsmittel innerhalb der Federkammer des Ventilkörpers vorgesehen.

Bei einer Weiterbildung der vorgenannten Ausführungsform, kann das Ventil mehrere, insbesondere zwei, Kraftübertragungsmittel aufweisen. Beispielsweise kann ein erstes Kraftübertragungsmittel an einem ersten Ende des Federelements und ein zweites Kraftübertragungsmittel an einem zweiten Ende des Federelements vorgesehen sein. Beide Kraftübertragungsmittel können innerhalb der Federkammer des Ventilkörpers angeordnet sein.

Wenn sich die Hubstange in der ersten Endposition befindet, kann die Hubstange über das erste Kraftübertragungsmittel eine erste Druckkraft auf das Federelement ausüben. Diese erste Druckkraft bewirkt vorzugsweise, dass das Federelement eine erste Federkraft auf das zweite Kraftübertragungsmittel ausübt, welche durch das zweite Kraftübertragungsmittel auf den Ventilkörper übertragen wird. Dementsprechend bewegt sich der Ventilkörper dann vorteilhafterweise in Richtung der ersten Druckkraft.

Wenn sich die Hubstange in der zweiten Endposition befindet, kann die Hubstange über das zweite Kraftübertragungsmittel eine zweite Druckkraft auf das Federelement ausüben. Vorzugsweise ist die zweite Druckkraft der ersten Druckkraft entgegengesetzt gerichtet. Die zweite Druckkraft bewirkt vorzugsweise, dass das Federelement eine zweite, der ersten Federkraft entgegen gerichtete Federkraft auf das erste Kraftübertragungsmittel ausübt, welche durch das erste Kraftübertragungsmittel auf den Ventilkörper übertragen wird. Dementsprechend bewegt sich der Ventilkörper dann vorteilhafterweise in Richtung der zweiten Druckkraft.

Eine Ausführungsform mit einem Kraftübertragungsmittel bewirkt insbesondere, dass die Steuerbewegung der Hubstange besonders gut, beispielsweise besonders gleichmäßig, auf das Federelement übertragen werden kann und/oder das Federelement seine Federkraft besonders gut, beispielsweise besonders gleichmäßig, auf den Ventilkörper übertragen kann. Dies hat den Vorteil, dass die Wahrscheinlichkeit eines Verklemmens des Ventilkörpers im Ventilgehäuse - und insofern ein ungewolltes Verschleißen oder Versagen des Ventils - stark reduziert werden kann.

Gemäß einer weiteren Alternative der vorliegenden Erfindung ist die Lösung der Aufgabe durch die Merkmale des Anspruchs 14 definiert. Diese alternative Lösung umfasst ein Verfahren zur Herstellung der Ventilantriebsvorrichtung nach einem der vorstehenden Ausführungsformen, wobei das Verfahren die Schritte des Anordnens der Anschlaghülse auf die Hubstange, des Anordnens des Mitnehmers in die Kulissenbahn der Anschlaghülse, des Aufbringens des Rotors auf die Anschlaghülse und des Einsetzens des Mitnehmers in das Führungselement, und des Befestigens der Übersetzungseinrichtung an der Hubstange aufweist.

Die Vorteile dieser Alternative sind mit denjenigen der vorausgehenden Ausführungsformen vergleichbar. In Bezug auf das Herstellungsverfahren wird zusätzlich der technische Vorteil erreicht, dass die Montage und die Einstellbarkeit der Ventilantriebsvorrichtung besonders einfach und fehlerunanfällig ist. Sowohl können die Komponenten einfach zusammengesetzt werden als auch in Abhängigkeit des Anwendungsfalls ausgetauscht werden. Beispielsweise kann eine Anpassung des Ventilhubs sinnvoll sein. So können der erste Endanschlag und/ oder der zweite Endanschlag durch einen Austausch der Anschlaghülse mit entsprechender Auslegung der Kulissenbahn einfach verändert werden. Beispielsweise braucht für den Austausch einer Anschlaghülse lediglich die Übersetzungseinrichtung von der Hubstange, der Rotor von der Anschlaghülse, der Mitnehmer aus der Kulissenbahn und die bestehende Anschlaghülse von der Hubstange entfernt werden. Beispielsweise braucht nach einer alternativen Ausführungsform lediglich der Deckel bzw. die Hülse entfernt zu werden, um die bestehende Anschlaghülse zu tauschen.

Im Anschluss muss eine neue Anschlaghülse auf die Hubstange aufgebracht, der Mitnehmer in die Kulissenbahn der neuen Anschlaghülse angeordnet und die entsprechenden Bauteile müssen je nach Ausführungsform wieder montiert werden.

Gemäß einer zusätzlichen Ausführungsform wird die Hubstange in axiale Richtung vorgespannt. Dadurch wird beispielsweise der technische Vorteil erreicht, dass der Hub der Hubstange besonders präzise eingestellt werden kann. Somit kann beispielsweise sichergestellt werden, dass der Ventilkörper in der vollständig geschlossenen Endlage mit einer vordefinierten Kraft gegen den Dichtsitz drückt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Weitere kombinierbare Merkmale, Vorteile und Ausführungsformen der Erfindung ergeben sich aus der nachfolgenden Beschreibung der in den Figuren dargestellten Ausführungsbeispiele. Es zeigen:
- Fig. 1: eine schematische Schnittdarstellung eines erfindungsgemäßen Ventils zur Absperrung und/oder Steuerung des Durchflusses von Fluiden,
- Fig. 2: eine schematische Schnittdarstellung eines erfindungsgemäßen Ventils zur Absperrung und/oder Steuerung des Durchflusses von Fluiden nach einer weiteren Ausführungsform,
- Fig. 3: eine schematische Schnittdarstellung eines erfindungsgemäßen Ventils zur Absperrung und/oder Steuerung des Durchflusses von Fluiden nach einer zusätzlichen Ausführungsform, und
- Fig. 4: eine schematische Schnittdarstellung eines weiteren Ausführungsbeispiels des Ventils zur Absperrung und/oder Steuerung des Durchflusses von Fluiden.

### Wege zur Ausführung der Erfindung

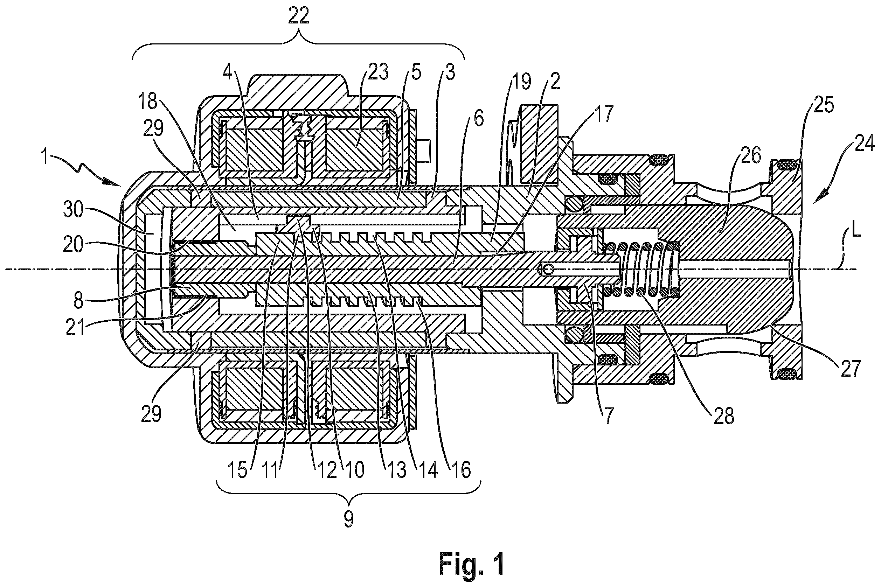

Die Figur 1 zeigt eine schematische Schnittdarstellung eines erfindungsgemäßen Ventils 24 zur Absperrung und/oder Steuerung des Durchflusses von Fluiden. Das Ventil 24 umfasst einen Ventilkörper 26 der innerhalb eines Ventilgehäuses 25 zwischen einer vollständig geschlossenen Position und einer vollständig geöffneten Position überführbar ausgebildet ist. Der Ventilkörper 26 wird hierbei durch eine Hubstange 6 translatorisch zwischen der vollständig geschlossenen Position und der vollständig geöffneten Position hin- und hergeführt. In der vollständig geschlossenen Position liegt der Ventilkörper 26 am Dichtsitz 27 an wodurch ein Fluidstrom durch das Fluidgehäuse 25 hindurch nicht möglich ist. In der vollständig geöffneten Position ist der Ventilkörper 26 von dem Dichtsitz 27 entfernt angeordnet, wodurch ein Fluidstrom durch das Fluidgehäuse 25 hindurch möglich ist.

Der Antrieb des Ventilkörpers 26 erfolgt mit Hilfe der Ventilantriebsvorrichtung 1. Die Ventilantriebsvorrichtung 1 umfasst ein Basiselement 2, welches beispielsweise der Befestigung des Ventils 24 in einem Einbauraum dient. Beispielsweise ist das Basiselement 2 aus einem geeigneten Metall wie Aluminium oder einem festen Kunststoff gefertigt. Innerhalb des Basiselements 2 ist eine Hubstange 6 zum Übertragen des Antriebs des Ventilkörpers 26 gelagert. Die Hubstange 6 ist bezüglich des Basiselements 2 entlang ihrer Längsachse L ausschließlich translatorisch bewegbar gelagert. Mit anderen Worten ist die Hubstange 6 zwischen einer ersten Endposition, in welcher der Ventilkörper 26 vollständig vom Dichtsitz 27 entfernt angeordnet und ein maximaler Fluidfluss möglich ist, und einer zweiten Endposition, in welcher der Ventilkörper 26 vollständig an dem Dichtsitz 27 anliegt und kein Fluidfluss möglich ist, translatorisch bewegbar. Die Bewegung zwischen der ersten Endposition und der zweiten Endposition verläuft hierbei vollständig rotationslos und ausschließlich translatorisch.

Zwischen einem Steuerende 7 der Hubstange 6 und dem Ventilkörper 26 befindet sich ein Federelement 28. Das Federelement 28 ermöglicht es den Ventilkörper 26 mit einer definierten Vorspannkraft in den Dichtsitz 27 zu drücken.

Um die Hubstange 6 herum ist ein um die Längsachse L drehbarer Rotor 3 angeordnet, welcher zum Antrieb der Hubstange 6 dient. Der Rotor 3 umfasst in seiner Umfangsrichtung einen oder mehrere Permanentmagnete 5 und wird mittels eines Stators 23 in Rotation überführt. An einem dem Steuerende 7 gegenüberliegenden Ende der Hubstange 6 ist eine Übersetzungseinrichtung 8 angeordnet. Die Übersetzungseinrichtung 8 ist mittels eines Außengewindes 20 fest mit dem Rotor 3 verbunden und dient der Übertragung der Rotation des Rotors 3 auf die Hubstange 6. Durch die Übertragung der Rotation des Rotors 3 über die Übertragungseinrichtung 8 auf die Hubstange 6 wird die Hubstange 6 ausschließlich translatorisch und ohne jeglichen rotatorischen Bewegungsanteil bewegt. Dadurch ist es nicht notwendig eine Drehentkopplung zwischen Hubstange 6 und Ventilkörper 26 anzuordnen. Zusätzlich braucht es auch keine Gleitscheibe, weil sich das Ausmaß an Verschleiß durch die rein translatorische Bewegung deutlich reduziert und keine Relativbewegung der Bauteile zueinander erfolgt. In einem Hohlraum 18 des Rotors 3 befindet sich eine Drehbegrenzungseinrichtung 9. Die Drehbegrenzungseinrichtung 9 dient dem Begrenzen der Drehbewegung des Rotors 3 zwischen einem ersten Endanschlag und einem zweiten Endanschlag. Hierbei befindet sich die Hubstange 6 in der vollständig geöffneten Endposition, wenn sich der Rotor 3 in den ersten Endanschlag gedreht hat. Entsprechend befindet sich die Hubstange 6 in der vollständig geschlossenen Endposition, wenn sich der Rotor 3 in den zweiten Endanschlag gedreht hat. Die Drehbegrenzungseinrichtung 9 ist zumindest abschnittsweise radial zwischen der Hubstange 6 und dem Rotor 3 angeordnet. Die Drehbegrenzungseinrichtung 9 umfasst eine Anschlaghülse 13 und einen Mitnehmer 10. Der Mitnehmer 10 ist zwischen der Anschlaghülse 13 und dem Rotor 3 angeordnet, wobei der Mitnehmer 10 in Axialrichtung verschiebebeweglich mit dem Rotor 3 verbunden ist.

Somit ist eine Drehmomentübertragung vom Rotor 3 auf den Mitnehmer 10 möglich. Die Anschlaghülse 13 umfasst eine in Radialrichtung ausgerichtete Kulissenbahn 14 zum Führen des Mitnehmers 10. Hierbei umfasst der Mitnehmer 10 einen ersten Vorsprung 11, welcher in die Kulissenbahn 14 eingreift. Somit wird ein Drehmoment vom Stator 23 auf den Rotor 3 und damit unmittelbar auf den Mitnehmer 10 übertragen, wobei der Mitnehmer 10 durch die Kulissenbahn 14 der Anschlaghülse 13 gleitet. Folglich wird die Drehbewegung des Rotors 3 in eine Drehbewegung des Mitnehmers 10 um die Anschlaghülse 13 überführt und der Mitnehmer 10 wird innerhalb Kulissenbahn 14 bewegt.

Die Axialbewegung der Hubstange wird durch die Übersetzungseinrichtung 8 bewirkt, während die Drehbegrenzungseinrichtung 9 mit dem Mitnehmer 10 und der Anschlaghülse 13 die erste Endposition und die zweite Endposition der Hubstange 6 definieren, wobei der Rotor 3 immer in einer axial unveränderten Position verbleibt.

Die Kulissenbahn 14 verfügt über ein erstes I<ulissenbahnende 15 und ein zweites I<ulissenbahnende 16. Das erste I<ulissenbahnende 15 entspricht hierbei dem ersten Endanschlag für den Rotor 3. Das zweite I<ulissenbahnende 16 entspricht entsprechend dem zweiten Endanschlag für den Rotor 3. Somit wird über die konkrete Anordnung des ersten I<ulissenbahnendes 15 die vollständig ausgefahrene Position der Hubstange 6 und damit die vollständig geschlossene Ventilposition definiert. Der Mitnehmer 10 gleitet hierbei aufgrund der Rotation des Rotors 3 durch die Kulissenbahn 14 der Anschlaghülse 13 und stößt auf das erste I<ulissenbahnende 15. Dadurch wird eine Fortsetzung der Rotationsbewegung des Rotors 3 verhindert. Entsprechend wird die Rotationsbewegung des Rotors 3 in der entgegengesetzten Rotationsrichtung blockiert, wenn der Mitnehmer 10 durch die Kulissenbahn 14 der Anschlaghülse 13 gleitet und auf das zweite I<ulissenbahnende 16 stößt. Somit wird über die konkrete Anordnung des zweiten I<ulissenbahnendes 16 die vollständig zurückgezogene Position der Hubstange 6 und damit die vollständig geöffnete Ventilposition definiert. Beim Erreichen des ersten Endanschlags ist das Ventil 24 vollständig geschlossen, wodurch der Ventilkörper 26 vollständig im Dichtsitz 27 anliegt. Beim Erreichen des zweiten Endanschlags ist das Ventil 24 vollständig geöffnet und die Hubstange 6 kann nicht weiter zurückgezogen werden. Die Endanschläge verhindern jeweils durch einen mechanischen Anschlag, dass trotz anliegenden Drehmoments keine weitere Axialbewegung der Hubstange 6 möglich ist.

Die Anschlaghülse 13 ist drehfest mit dem Basiselement 2 verbunden. Realisiert ist dies mittels einer Verdrehsicherung 17 zwischen Hubstange 6 und Anschlaghülse 13. Die Verdrehsicherung 17 verfügt hierbei über einen Finger 19, welcher in axialer Richtung in eine Aussparung im Basiselement 2 passgenau eingreift. Die Hubstange 6 und die Anschlaghülse 13 sind über eine Verdrehsicherung 17 miteinander verbunden. Somit ist die Verdrehsicherung 17 zwischen Hubstange 6 und Anschlaghülse 13 realisiert.

Der Rotor 3 umfasst ein Führungselement 4 in Form einer axial ausgerichteten Nut. Der Mitnehmer 10 ist einerseits radial innenliegend mittels des ersten Vorsprungs 11 in der Kulissenbahn 14 der Anschlaghülse 13 und andererseits radial außenliegend mittels des zweiten Vorsprungs 12 in dem Führungselement 4 der Rotors 3 geführt. Somit ist der Mitnehmer 10 gegenüber dem Rotor 3 ausschließlich in Längsrichtung beweglich, wodurch lediglich eine Drehmomentübertragung vom Rotor 3 auf den Mitnehmer 10 möglich ist.

Durch die Drehbegrenzungseinrichtung 9 findet keine axiale Bewegung des Rotors 3 im Verhältnis zu dem Stator 2 statt, während sich die Ventilantriebsvorrichtung 1 zwischen dem ersten Endanschlag und dem zweiten Endanschlag bewegt. Somit ist eine verbesserte Drehmomentübertragung zwischen Stator 23 und Rotor 3 realisiert, wodurch eine besonders kompakte Bauform der Ventilantriebsvorrichtung 1 möglich ist.

In einer Axialrichtung befindet sich zwischen dem Permanentmagnet 5 des Rotors 3 und dem Deckelelement 30 ein loses Lagerelement 29. Das Lagerelement 29 ist in Umfangsrichtung ausgebildet und hat einerseits eine Lagerfunktion zwischen Rotor 3 und Deckelelement 30. Andererseits ist das lose Lagerelement 29 dazu ausgebildet Längenausdehnungen des Rotors aufgrund von Temperaturunterschieden zu kompensieren. Wenn beispielsweise keine unterschiedlichen Längenausdehnungen aufgenommen werden, so kann das Lagerelement auch einstückig mit dem Rotor ausgeführt sein.

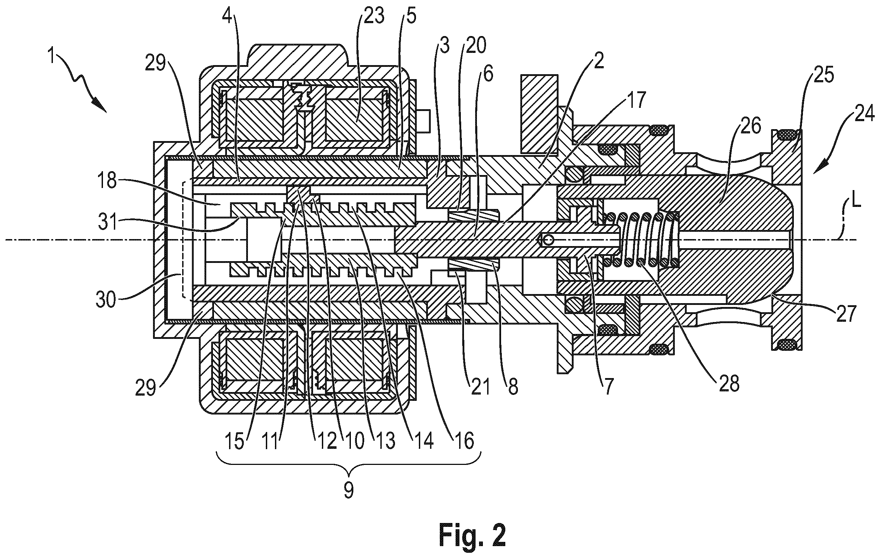

Die Figur 2 zeigt eine schematische Schnittdarstellung eines erfindungsgemäßen Ventils zur Absperrung und/oder Steuerung des Durchflusses von Fluiden nach einer weiteren Ausführungsform. Wie auch in der vorangehenden Ausführungsform umfasst das Ventil 24 einen Ventilkörper 26 der innerhalb eines Ventilgehäuses 25 zwischen einer vollständig geschlossenen Position und einer vollständig geöffneten Position überführbar ausgebildet ist. Der Ventilkörper 26 wird auch in dieser Ausführungsform durch eine Hubstange 6 translatorisch zwischen der vollständig geschlossenen Position und der vollständig geöffneten Position hin- und hergeführt. In der vollständig geschlossenen Position liegt der Ventilkörper 26 am Dichtsitz 27 an wodurch ein Fluidstrom durch das Fluidgehäuse 25 hindurch nicht möglich ist. In der vollständig geöffneten Position ist der Ventilkörper 26 von dem Dichtsitz 27 entfernt angeordnet, wodurch ein Fluidstrom durch das Fluidgehäuse 25 hindurch möglich ist.

Der Antrieb des Ventilkörpers 26 erfolgt mit Hilfe der Ventilantriebsvorrichtung 1, die ein Basiselement 2 umfasst. Innerhalb des Basiselements 2 ist eine Hubstange 6 zum Übertragen des Antriebs des Ventilkörpers 26 gelagert. Die Hubstange 6 ist bezüglich des Basiselements 2 entlang ihrer Längsachse L ausschließlich translatorisch bewegbar gelagert. Somit ist die Hubstange 6 zwischen einer ersten Endposition, in welcher der Ventilkörper 26 vollständig vom Dichtsitz 27 entfernt angeordnet und ein maximaler Fluidfluss möglich ist, und einer zweiten Endposition, in welcher der Ventilkörper 26 vollständig an dem Dichtsitz 27 anliegt und kein Fluidfluss möglich ist, translatorisch bewegbar. Die Bewegung zwischen der ersten Endposition und der zweiten Endposition verläuft in dieser Ausführungsform ebenfalls vollständig rotationslos und ausschließlich translatorisch.

Zwischen einem Steuerende 7 der Hubstange 6 und dem Ventilkörper 26 befindet sich ein Federelement 28. Das Federelement 28 ermöglicht es den Ventilkörper 26 mit einer definierten Vorspannkraft in den Dichtsitz 27 zu drücken.

Um die Hubstange 6 herum ist ein um die Längsachse L drehbarer Rotor 3 angeordnet, welcher zum Antrieb der Hubstange 6 dient. Der Rotor 3 umfasst in seiner Umfangsrichtung einen oder mehrere Permanentmagnete 5 und wird mittels eines Stators 23 in Rotation überführt.

Zwischen dem Steuerende 7 der Hubstange 6 und einem dem Steuerende 7 entgegengesetzten Ende der Hubstange 6 befindet sich eine Übersetzungseinrichtung 8. Die Übersetzungseinrichtung 8 befindet sich hierbei unmittelbar zwischen einem dem Basiselement 2 zugeordneten Ende des Rotors 3 und dem Basiselement 2 selbst. Hierbei erstreckt sich die Hubstange 6 lediglich teilweise in die Anschlaghülse 13 hinein. Die Übersetzungseinrichtung 8 ist mittels eines Außengewindes 20 fest mit dem Rotor 3 verbunden und dient der Übertragung der Rotation des Rotors 3 auf die Hubstange 6. Durch die Übertragung der Rotation des Rotors 3 über die Übertragungseinrichtung 8 auf die Hubstange 6 wird die Hubstange 6 ausschließlich translatorisch und ohne jeglichen rotatorischen Bewegungsanteil bewegt. Dadurch ist es nicht notwendig eine Drehentkopplung zwischen Hubstange 6 und Ventilkörper 26 anzuordnen. Zusätzlich braucht es auch keine Gleitscheibe, weil sich das Ausmaß an Verschleiß durch die rein translatorische Bewegung deutlich reduziert und keine Relativbewegung der Bauteile zueinander erfolgt.

Im Unterschied zur ersten Ausführungsform ist die Hubstange 6 deutlich kürzer ausgebildet, wodurch die gesamte Ventilantriebsvorrichtung 1 in Längsrichtung kompakter ausgebildet werden kann. Die Hubstange 6 ist hierbei lediglich über das Steuerende 7 gelagert, wodurch die Herstellungskosten und die Toleranzvorgaben reduziert werden können.

In einem Hohlraum 18 des Rotors 3 befindet sich eine Drehbegrenzungseinrichtung 9. Die Drehbegrenzungseinrichtung 9 dient dem Begrenzen der Drehbewegung des Rotors 3 zwischen einem ersten Endanschlag und einem zweiten Endanschlag und funktioniert funktionsmäßig identisch wie in der ersten Ausführungsform in Figur 1. Hierbei befindet sich die Hubstange 6 in der vollständig geöffneten Endposition, wenn sich der Rotor 3 in den ersten Endanschlag gedreht hat. Entsprechend befindet sich die Hubstange 6 in der vollständig geschlossenen Endposition, wenn sich der Rotor 3 in den zweiten Endanschlag gedreht hat. Die Drehbegrenzungseinrichtung 9 ist vollständig radial innerhalb des Rotors 3 angeordnet. Die Drehbegrenzungseinrichtung 9 umfasst eine Anschlaghülse 13 und einen Mitnehmer 10. Der Mitnehmer 10 ist zwischen der Anschlaghülse 13 und dem Rotor 3 angeordnet, wobei der Mitnehmer 10 in Axialrichtung verschiebebeweglich mit dem Rotor 3 verbunden ist.

Somit ist auch in dieser Ausführungsform eine Drehmomentübertragung vom Rotor 3 auf den Mitnehmer 10 möglich. Die Anschlaghülse 13 umfasst eine in Radialrichtung ausgerichtete Kulissenbahn 14 zum Führen des Mitnehmers 10. Hierbei umfasst der Mitnehmer 10 einen ersten Vorsprung 11, welcher in die Kulissenbahn 14 eingreift. Somit wird ein Drehmoment vom Stator 23 auf den Rotor 3 und damit unmittelbar auf den Mitnehmer 10 übertragen, wobei der Mitnehmer 10 durch die Kulissenbahn 14 der Anschlaghülse 13 gleitet. Folglich wird die Drehbewegung des Rotors 3 in eine Drehbewegung des Mitnehmers 10 um die Anschlaghülse 13 überführt und der Mitnehmer 10 wird innerhalb Kulissenbahn 14 bewegt.

Auf eine wiederholte Beschreibung der Drehbegrenzungseinrichtung wird verzichtet und vollumfänglich auf die Beschreibung zu Figur 1 verwiesen.

Auf einer der Übersetzungseinrichtung 8 entgegengesetzten Seite des Rotors 3 umfasst die Ventilantriebsvorrichtung 1 ein Deckelelement 30, welches mit der Anschlaghülse 13 über einen Eingriff 31 drehfest verbunden ist. Die Anschlaghülse 13 ist dadurch mit dem Deckelelement 30 drehfest verbunden. Der Eingriff 31 hierbei längsbeweglich ausgebildet, wodurch ein Toleranzausgleich in Längsrichtung möglich ist. Beispielsweise kann der Eingriff 31 mittels einer drehmomentübertragenden Steckverbindung zum Deckelelement 30 realisiert sein.

In einer Axialrichtung befindet sich zwischen dem Rotor 3 und dem Deckelelement 30 ein Lagerelement 29. Das Lagerelement 29 ist in Umfangsrichtung ausgebildet und hat einerseits eine Lagerfunktion zwischen Rotor 3 und Deckelelement 30. Andererseits ist das Lagerelement 29 dazu ausgebildet Materialspannungen aufgrund von Temperaturunterschieden zu kompensieren.

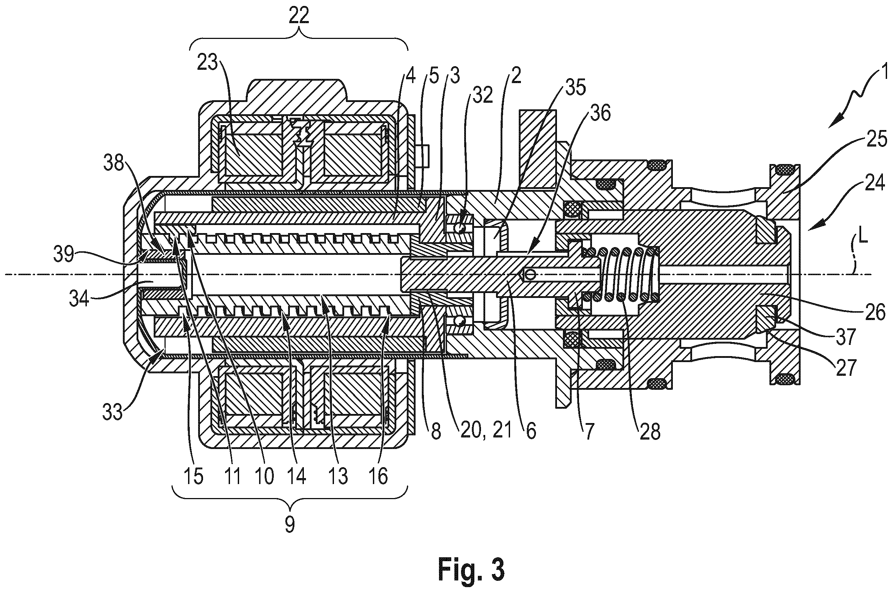

Die Figur 3 zeigt eine schematische Schnittdarstellung eines erfindungsgemäßen Ventils 24 zur Absperrung und/oder Steuerung des Durchflusses von Fluiden nach einer zusätzlichen Ausführungsform. Wie auch in den vorangehenden Ausführungsformen umfasst das Ventil 24 einen Ventilkörper 26 der innerhalb eines Ventilgehäuses 25 zwischen einer vollständig geschlossenen Position und einer vollständig geöffneten Position überführbar ausgebildet ist. Der Ventilkörper 26 wird auch in dieser Ausführungsform durch eine Hubstange 6 translatorisch zwischen der vollständig geschlossenen Position und der vollständig geöffneten Position hin- und hergeführt. In der vollständig geschlossenen Position liegt der Ventilkörper 26 am Dichtsitz 27 an, wodurch ein Fluidstrom durch das Fluidgehäuse 25 hindurch nicht möglich ist. Der Ventilkörper 26 verfügt über ein ringförmiges Dichtelement 37, welches eine verbesserte Abdichtung zwischen Ventilkörper 26 und Dichtsitz 27 ermöglicht und somit höheren Leckageanforderungen Rechnung trägt. In der vollständig geöffneten Position ist der Ventilkörper 26 von dem Dichtsitz 27 entfernt angeordnet, wodurch ein Fluidstrom durch das Fluidgehäuse 25 hindurch möglich ist.

Der Antrieb des Ventilkörpers 26 erfolgt auch in dieser Ausführungsform mit Hilfe der Ventilantriebsvorrichtung 1, die ein Basiselement 2 umfasst. Innerhalb des Basiselements 2 ist eine Hubstange 6 zum Übertragen des Antriebs auf dem Ventilkörpers 26 gelagert. Die Hubstange 6 ist bezüglich des Basiselements 2 entlang ihrer Längsachse L ausschließlich translatorisch bewegbar. Innerhalb des Basiselements 2 ist ein Führungsmittel 35 in Form einer Führungsscheibe angeordnet. Die Hubstange 6 verläuft durch die Führungsscheibe hindurch, wobei eine Längskontur 36 an der Hubstange 6 angeordnet ist. Die Längskontur 36 liegt in einer radial angeordneten Führungskerbe oder Führungsnase der Führungsscheibe. Somit ist die Hubstange 6 zwischen einer ersten Endposition, in welcher der Ventilkörper 26 vollständig vom Dichtsitz 27 entfernt angeordnet und ein maximaler Fluidfluss möglich ist, und einer zweiten Endposition, in welcher der Ventilkörper 26 vollständig an dem Dichtsitz 27 anliegt und kein Fluidfluss möglich ist, rein translatorisch bewegbar. Die Bewegung zwischen der ersten Endposition und der zweiten Endposition verläuft in dieser Ausführungsform ebenfalls vollständig rotationslos und ausschließlich translatorisch.

Zwischen dem Steuerende 7 der Hubstange 6 und dem Ventilkörper 26 befindet sich ein Federelement 28. Das Federelement 28 ermöglicht es den Ventilkörper 26 mit einer definierten Vorspannkraft in den Dichtsitz 27 zu drücken. Koaxial zur Hubstange 6 befindet sich ein um die Längsachse L drehbarer Rotor 3, welcher zum Antrieb der Hubstange 6 dient. Der Rotor 3 umfasst in seiner Umfangsrichtung einen oder mehrere Permanentmagnete 5 und wird mittels eines Stators 23 in Rotation überführt.

An einem dem Steuerende 7 der Hubstange 6 entgegengesetzten Ende der Hubstange 6 befindet sich eine Übersetzungseinrichtung 8. Die Übersetzungseinrichtung 8 ist als metallisches Bauteil gefertigt, wobei der Rotor 3 unmittelbar mit der Übersetzungseinrichtung 8 verbunden ist. Zwischen einem flanschartigen Fortsatz der Übersetzungseinrichtung 8 und dem Basiselement 2 ist ein Wälzlager 32 zum Lagern des Rotors 3 gegenüber dem Basisteil 2 angeordnet. Somit kommt der Übersetzungseinrichtung 8 eine Doppelfunktion zu. Einerseits überführt die Übersetzungseinrichtung 8 eine Rotationsbewegung des Rotors 3 in eine Translationsbewegung der Hubstange 6. Andererseits lagert die Übersetzungseinrichtung 8 den Rotor 3 mittels eines Wälzlagers 32 an dem Basiselement 2. Die Lagerung erfolgt sowohl radial als auch radial.

Im Unterschied zu den beiden ersten Ausführungsformen ist die Hubstange 6 kürzer ausgebildet, wodurch die gesamte Ventilantriebsvorrichtung 1 in Längsrichtung noch kompakter ausgebildet werden kann. Die Hubstange 6 ist hierbei lediglich über das Steuerende 7 gelagert, wodurch die Herstellungskosten und die Toleranzvorgaben reduziert werden können.

Innerhalb des Rotors 3 befindet sich eine Drehbegrenzungseinrichtung 9. Die Drehbegrenzungseinrichtung 9 dient dem Begrenzen der Drehbewegung des Rotors 3 zwischen einem ersten Endanschlag und einem zweiten Endanschlag und funktioniert funktionsmäßig identisch wie in den beiden ersten Ausführungsformen in Figur 1 und Figur 2. Hierbei befindet sich die Hubstange 6 in der vollständig geöffneten Endposition, wenn sich der Rotor 3 in den ersten Endanschlag gedreht hat. Entsprechend befindet sich die Hubstange 6 in der vollständig geschlossenen Endposition, wenn sich der Rotor 3 in den zweiten Endanschlag gedreht hat. Die Drehbegrenzungseinrichtung 9 ist vollständig radial innerhalb des Rotors 3 angeordnet. Die Drehbegrenzungseinrichtung 9 umfasst eine Anschlaghülse 13 und einen Mitnehmer 10. Der Mitnehmer 10 ist zwischen der Anschlaghülse 13 und dem Rotor 3 angeordnet, wobei der Mitnehmer 10 in Axialrichtung verschiebebeweglich mit dem Rotor 3 verbunden ist.

Somit ist auch in dieser Ausführungsform eine Drehmomentübertragung vom Rotor 3 auf den Mitnehmer 10 möglich. Die Anschlaghülse 13 umfasst eine in Radialrichtung ausgerichtete Kulissenbahn 14 zum Führen des Mitnehmers 10. Hierbei umfasst der Mitnehmer 10 einen ersten Vorsprung 11, welcher in die Kulissenbahn 14 eingreift. Somit wird ein Drehmoment vom Stator 23 auf den Rotor 3 und damit unmittelbar auf den Mitnehmer 10 übertragen, wobei der Mitnehmer 10 durch die Kulissenbahn 14 der Anschlaghülse 13 gleitet. Die Drehbewegung des Rotors 3 wird in eine Drehbewegung des Mitnehmers 10 um die Anschlaghülse 13 überführt und der Mitnehmer 10 wird innerhalb der Kulissenbahn 14 bewegt.

Auf eine wiederholte Beschreibung der Drehbegrenzungseinrichtung wird verzichtet und vollumfänglich auf die Beschreibung zu der Figur 1 und der Figur 2 verwiesen.

Der Rotor 3, die Permanentmagnete 5, die Drehbegrenzungseinrichtung 9 und die Übersetzungseinrichtung 8 befinden sich innerhalb einer Abdeckhülse 33. Die Abdeckhülse 33 ist vorzugsweise durch ein Tiefziehverfahren hergestellt. Die Abdeckhülse 33 ist fest mit dem Basiselement 2 verbunden und weist an einem dem Basiselement 2 entgegengesetzten Ende einen innenliegenden Hülsenfortsatz 34 auf. Der Hülsenfortsatz 34 greift axial in die Anschlaghülse 13 ein, wodurch die Anschlaghülse 13 gegenüber der Abdeckhülse 33 und damit gegenüber dem Basiselement 2 drehgesichert ist.

Zwischen dem Hülsenfortsatz 34 und der Anschlagshülse 13 kann ein Adapter 38 angeordnet werden. Der Adapter 38 verfügt über radial außen angeordnete Zähne, welche einen einfachen Eingriff des Adapters 38 in die innenliegende Zahnkontur 39 der Anschlaghülse 13 ermöglicht. In der vorliegenden Ausführungsform wird der Formschluss zwischen Adapter 38 und Anschlaghülse 13 mittels 60 Zähnen realisiert, die in der Umfangsrichtung angeordnet sind. Alternativ könne auch weniger oder mehr Zähne eingesetzt werden. Mit Hilfe des Adapters 38 und der innenliegenden Zahnkontur 39 der Anschlaghülse, lässt sich die Ventilsteuervorrichtung 1 besonders einfach montieren und der Endanschlag in Bezug zum Ventilsitz präzise einstellen, wobei insbesondere die Bauteile innerhalb der Abdeckhülse 33 leicht einfügbar sind und präzise angeordnet werden können.

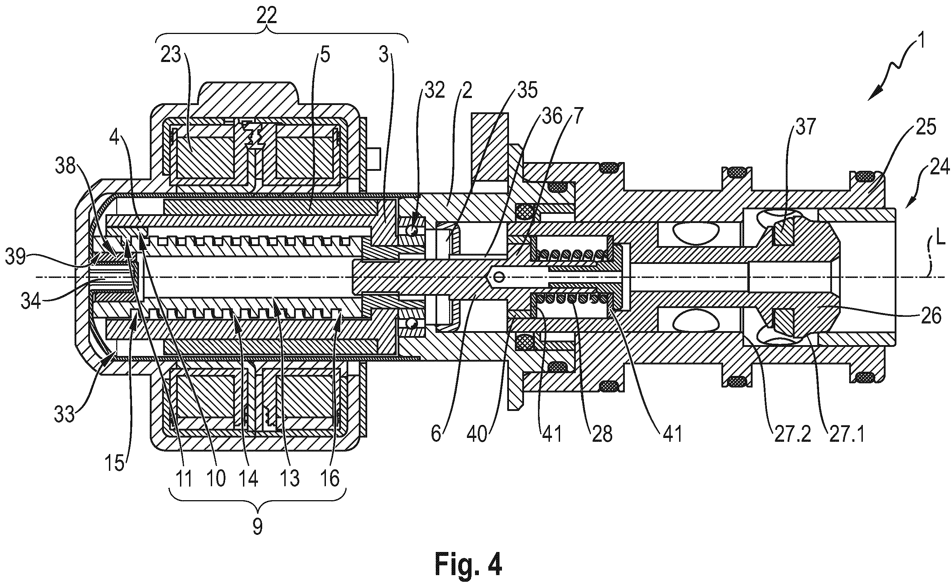

Figur 4 zeigt eine schematische Schnittdarstellung eines weiteren Ausführungsbeispiels eines Ventils 24 zur Absperrung und/oder Steuerung des Durchflusses von Fluiden. Die Ventilantriebsvorrichtung 1 des in Figur 4 dargestellten Ventils 24 ist analog der Ventilantriebsvorrichtung 1 des in Figur 3 dargestellten Ventils 24 ausgeführt.

Im Unterschied zu dem in Figur 3 gezeigten Ventil 24 weist das in Figur 4 gezeigte Ventil 24, insbesondere der in Figur 4 gezeigte Ventilkörper 26 des Ventils 24, zwei Dichtsitze 27, nämlich einen ersten Dichtsitz 27.1 und einen zweiten Dichtsitz 27.2, auf. Auch in der in Figur 4 dargestellten Stellung befindet sich die Hubstange 6 in der zweiten Endposition. Dies ist daran zu erkennen, dass der Ventilkörper 26 vollständig nach rechts verschoben ist und fluiddicht am ersten Dichtsitz 27.1 anliegt. Mit anderen Worten befindet sich der Ventilkörper 26 in der Darstellung von Figur 4 in einer ersten, vollständig geschlossenen Position.

Wenn die Ventilantriebsvorrichtung 1 das Ventil 24, insbesondere den Ventilkörper 26, antreibt, wird die Hubstange 6 von der in Figur 4 dargestellten zweiten Endposition in die erste Endposition bewegt. Hierfür bewegt sich die Hubstange 6 in Bezug auf die Längsachse L in axiale Richtung nach links. Diese Bewegung der Hubstange 6 führt dazu, dass auch der Ventilkörper 26 in Bezug auf die Längsachse L in axiale Richtung nach links bewegt wird. Der Ventilkörper 26 bewegt sich dabei so lange nach links, bis der Ventilkörper 26 mit seinem Dichtelement 37 am zweiten Dichtsitz 27.2 anschlägt bzw. fluiddicht an dem zweiten Dichtsitz 27.2 anliegt. Der Ventilkörper 26 befindet sich dann in einer zweiten vollständig geschlossenen Position.

Der Ventilkörper 26 bildet gemeinsam mit einem Stützring 40 einen Hohlraum 42, welcher im Folgenden auch als Federkammer 42 bezeichnet wird. Der Stützring 40 ist derart ausgebildet, dass der Stützring 40 einen Durchgang für die Hubstange 6 aufweist. Mit anderen Worten erstreckt sich die Hubstange 6 derart durch den Durchgang im Stützring 40 hindurch, dass die Hubstange 6 in die Federkammer 42 hineinragt.

Innerhalb der Federkammer 42 ist ein Federelement 28 vorgesehen. Das Federelement 28 ist in Bezug auf die Längsachse L in axiale Richtung zwischen der Hubstange 6 und dem Ventilkörper 26 angeordnet. Das Federelement 28 stützt sich mit seinem linken Ende an einem linken Kraftübertragungsmittel 41, insbesondere an einem ersten Kraftübertragungsmittel 41, ab. Mit seinem rechten Ende stützt sich das Federelement 28 an einem rechten Kraftübertragungsmittel 41, insbesondere an einem zweiten Kraftübertragungsmittel 41, ab.

In der in Figur 4 gezeigten Stellung drückt die Hubstange 6 mit ihrem Steuerende 7 derart auf das linke Kraftübertragungsmittel 41, dass das linke Kraftübertragungsmittel 41 nach rechts gedrückt wird. Dies bewirkt, dass das Federelement 28 nach rechts komprimiert wird. Die daraus resultierende Federkraft des Federelement 28 drückt ihrerseits das rechte Kraftübertragungsmittel 41 gegen den Ventilkörper 26. In der Konsequenz wird der Ventilkörper 26 mit der Federkraft des Federelements 28 gegen den ersten Dichtsitz 27.1 gedrückt. Wenn sich die Hubstange 6, ausgehend von der in Figur 4 gezeigten Darstellung, nach links bewegt, wird die Hubstange 6 das rechte Kraftübertragungsmittel 41 mit ihrem rechten Ende nach links drücken. Dies bewirkt, dass das Federelement 28 nach links komprimiert wird. Die daraus resultierende Federkraft des Federelement 28 drückt ihrerseits das linke Kraftübertragungsmittel 41 nach links. Da sich das linke Kraftübertragungsmittel 41 aber nicht mehr an dem Steuerende 7 der Hubstange 6 abstützen kann (das Steuerende 7 hat sich dann nämlich mit der Hubstange 6 nach links bewegt), wird das linke Kraftübertragungsmittel 41 gegen den Stützring 40 gedrückt. Der Stützring 40 ist seinerseits fest mit dem Ventilkörper 26 verbunden. Folglich wird der Ventilkörper 26 aufgrund der Federkraft des Federelements 28 so lange nach links bewegt, bis der Ventilkörper 26 gegen den zweiten Dichtsitz 27.2 gedrückt wird. Beendet wird der Hub durch Erreichen des Endanschlags in der Kulisse. Je nach Toleranzlage wird dabei die Feder etwas mehr oder weniger vorgespannt, jedoch variiert dabei das Kraftniveau in einem sehr geringen Bereich. Die Schließkraft des Dichtsitzes ist definiert und variiert nur in sehr kleinen Grenzen.

### Bezugszeichenliste

| | |
|---|---|
| 1 | Ventilsteuervorrichtung |
| 2 | Basiselement |
| 3 | Rotor |
| 4 | Führungselement / Führungsnut |
| 5 | Permanentmagnet |
| 6 | Hubstange |
| 7 | Steuerende |
| 8 | Übersetzungseinrichtung |
| 9 | Drehbegrenzungseinrichtung |
| 10 | Mitnehmer |
| 11 | Erster Vorsprung des Mitnehmers |
| 12 | Zweiter Vorsprung des Mitnehmers |
| 13 | Anschlaghülse |
| 14 | Kulissenbahn |
| 15 | Erstes I<ulissenbahnende |
| 16 | Zweites I<ulissenbahnende |
| 17 | Verdrehsicherung zwischen Hubstange und Anschlaghülse |
| 18 | Hohlraum |
| 19 | Finger |
| 20 | Außengewinde der Übersetzungseinrichtung |
| 21 | Innengewinde des Rotors |
| 22 | Schrittmotor |
| 23 | Stator |
| 24 | Ventil |
| 25 | Ventilgehäuse |
| 26 | Ventilkörper |
| 27 | Dichtsitz |
| 27.1 | erster Dichtsitz |
| 27.2 | zweiter Dichtsitz |
| 28 | Federelement |
| 29 | Lagerelement |
| 30 | Deckelelement |
| 31 | Eingriff |
| 32 | Wälzlager |
| 33 | Abdeckhülse |
| 34 | Hülsenfortsatz |
| 35 | Führungsmittel |
| 36 | Längskontur |
| 37 | Dichtelement |
| 38 | Adapter |
| 39 | Zahnkontur |
| 40 | Stützring |
| 41 | Kraftübertragungsmittel |
| 42 | Federkammer |
| D | Drehachse des Rotors |
| L | Längsachse des Steuerkolbens |

## Patentansprüche

1. Ventilantriebsvorrichtung (1) mit
einem Basiselement (2),
einer Hubstange (6) zum Antrieb eines Ventilkörpers (26), wobei die Hubstange (6) in Bezug auf das Basiselement (2) entlang ihrer Längsachse (L) zwischen einer ersten Endposition und einer von der ersten Endposition abweichenden zweiten Endposition translatorisch und rotationslos bewegbar ist,
einen um die Längsachse (L) drehbaren Rotor (3) zum Antrieb der Hubstange (6), wobei eine Drehbewegung des Rotors (3) durch eine Übersetzungseinrichtung (8) in die translatorische und rotationslose Bewegung der Hubstange (6) überführbar ist, und
einer Drehbegrenzungseinrichtung (9) zum Begrenzen der Drehbewegung des Rotors (3) zwischen einem ersten Endanschlag und einem zweiten Endanschlag, wobei
sich die Hubstange (6) in der ersten Endposition befindet, wenn sich der Rotor (3) in den ersten Endanschlag gedreht hat, und sich die Hubstange (6) in der zweiten Endposition befindet, wenn sich der Rotor (3) in den zweiten Endanschlag gedreht hat,
**dadurch gekennzeichnet, dass**
die Drehbegrenzungseinrichtung (9) eine Anschlaghülse (13) und einen Mitnehmer (10) aufweist, wobei der Mitnehmer (10) zwischen der Anschlaghülse (13) und dem Rotor (3) angeordnet ist, der Mitnehmer (10) drehfest und verschiebebeweglich mit dem Rotor (3) verbunden ist, und die Anschlaghülse (13) eine Kulissenbahn (14) zum Führen des Mitnehmers (10) aufweist.

2. Ventilantriebsvorrichtung (1) nach Anspruch 1, **dadurch gekennzeichnet, dass** die Drehbegrenzungseinrichtung (9) zumindest abschnittsweise radial zwischen der Hubstange (6) und dem Rotor (3) angeordnet ist.

3. Ventilantriebsvorrichtung (1) nach Anspruch 1 oder 2, **dadurch gekennzeichnet, dass** eine Drehbewegung des Rotors (3) eine Drehbewegung des Mitnehmers (10) um die Anschlaghülse (13) bewirkt und der Mitnehmer (10) innerhalb der Kulissenbahn (14) bewegt wird und/oder dass die Kulissenbahn (14) als helixförmige Nut (14) in der Anschlaghülse (13) ausgebildet ist und der Mitnehmer (10) einen ersten Vorsprung (11) aufweist, der in die helixförmige Nut (14) der Anschlaghülse (13) eingreifend angeordnet ist und/oder dass die Kulissenbahn (14) ein erstes I<ulissenbahnende (15) und ein zweites I<ulissenbahnende (16) aufweist, wobei das erstes Kulissenbahnende (15) den ersten Endanschlag für den Rotor (3) definiert und das zweites I<ulissenbahnende (16) den zweiten Endanschlag für den Rotor (3) definiert.

4. Ventilantriebsvorrichtung (1) nach einem der vorhergehenden Ansprüche, **dadurch gekennzeichnet, dass** die Anschlaghülse (13) drehfest mit dem Basiselement (2) verbunden ist und/oder dass die Hubstange (6) drehfest und verschiebebeweglich in dem Basiselement (2) angeordnet ist.

5. Ventilantriebsvorrichtung (1) nach einem der vorhergehenden Ansprüche, **dadurch gekennzeichnet, dass** der Rotor (3) ein Führungselement (4) aufweist, wobei der Mitnehmer (10) über das Führungselement (4) drehfest und verschiebebeweglich mit dem Rotor (3) verbunden ist und/oder dass der Rotor (3) über ein Wälzlager (32) an dem Basiselement (2) gelagert ist.

6. Ventilantriebsvorrichtung (1) nach einem der vorhergehenden Ansprüche, **dadurch gekennzeichnet, dass** die Hubstange (6) in Längsrichtung ein Steuerende (7) zum Steuern des Ventilkörpers (26) aufweist und die Übersetzungseinrichtung (8) an einem dem Steuerende (7) gegenüberliegenden Ende der Hubstange (6) angeordnet ist und/oder dass die Hubstange (6) in Bezug auf einen zu steuernden Ventilkörper (26) vorspannbar gelagert ist.

7. Ventilantriebsvorrichtung (1) nach einem der vorhergehenden Ansprüche, **dadurch gekennzeichnet, dass** die Ventilantriebsvorrichtung (1) einen Schrittmotor (22) aufweist, wobei der Schrittmotor (22) einen Stator (23) und den Rotor (3) umfasst, und der Stator (23) den Rotor (3) zumindest abschnittsweise ummantelt und über den Stator (23) die Drehbewegung des Rotors (3) steuerbar ist, insbesondere wobei eine axiale Ausrichtung des Stators (23) in Bezug auf den Rotor (3) während einer Drehbewegung des Rotors (3) zwischen dem ersten Endanschlag und dem zweiten Endanschlag unveränderlich ausgebildet ist.

8. Ventilantriebsvorrichtung (1) nach einem der vorhergehenden Ansprüche, **dadurch gekennzeichnet, dass** die Hubstange (6) in Längsrichtung ein Steuerende (7) zum Steuern des Ventilkörpers (26) aufweist und die Übersetzungseinrichtung (9) zwischen dem Steuerende (7) und der Anschlaghülse (13) angeordnet ist, insbesondere wobei die Ventilantriebsvorrichtung (1) ein Deckelelement (30) aufweist, welches mit der Anschlaghülse (13) mittels eines Eingriffs (31) drehfest verbunden ist.

9. Ventilantriebsvorrichtung (1) nach einem der vorstehenden Ansprüche, **dadurch gekennzeichnet, dass** die Ventilantriebsvorrichtung (1) eine tiefgezogene Abdeckhülse (33) umfasst, welche fest mit dem Basiselement (2) verbunden ist, wobei der Rotor (3) und die Drehbegrenzungseinrichtung (9) vorzugsweise vollständig in der Abdeckhülse (33) aufgenommen sind, insbesondere wobei die Abdeckhülse (33) einen Hülsenfortsatz (34) zum Eingriff in die Anschlaghülse (13) aufweist, wobei der Hülsenfortsatz (34) dazu ausgebildet ist, die Anschlaghülse (13) gegenüber der Abdeckhülse (33) zumindest drehfest zu fixieren.

10. Ventilantriebsvorrichtung (1) nach einem der vorstehenden Ansprüche, **dadurch gekennzeichnet, dass** das Basiselement (2) ein Führungsmittel (35) umfasst, wobei das Führungsmittel (35) dazu ausgebildet ist, die Hubstange (6) entlang einer Längskontur (36) axial zu führen.

11. Ventil (24) zur Absperrung und/oder Steuerung des Durchflusses von Fluiden, das Ventil (24) umfassend:
- einen Ventilkörper (26), der innerhalb eines Ventilgehäuses (25) zwischen einer vollständig geschlossenen Position und einer vollständig geöffneten Position überführbar ausgebildet ist, und
- eine Ventilantriebsvorrichtung (1) nach einem der vorhergehenden Ansprüche, wobei die Position des Ventill<örpers (26) durch die Hubstange (6) der Ventilantriebsvorrichtung (1) steuerbar ist.

12. Ventil (24) nach Anspruch 11, **dadurch gekennzeichnet, dass** der Ventilkörper (26) zumindest ein Dichtelement (37) aufweist, wobei das Dichtelement (37) dazu ausgebildet ist, fluiddicht an einem Dichtsitz (27) des Ventilgehäuses (25) anzuliegen, wenn sich der Ventilkörper (26) in der vollständig geschlossenen Position befindet und/oder dass das Ventilgehäuse (25) einen ersten Dichtsitz (27.1) und einen zweiten Dichtsitz (27.2) aufweist, und der Ventilkörper (26) zwischen dem ersten Dichtsitz (27.1) und dem zweiten Dichtsitz (27.2) hin und her überführbar ist und/oder dass das Ventil (24) ein Federelement (28) aufweist, wobei das Federelement (28) in Bezug auf die Längsachse (L) in axialer Richtung zwischen der Hubstange (6) und dem Ventilkörper (26) angeordnet ist.

13. Ventil (24) nach Anspruch 12, **dadurch gekennzeichnet, dass** das Federelement (28) dazu ausgebildet ist, den Ventilkörper (26) in den ersten Dichtsitz (27.1) und/oder den zweiten Dichtsitz (27.2) zu drücken und/oder dass das Federelement (28) über ein Kraftübertragungsmittel (41) und in Abhängigkeit von der Position der Hubstange (6) entweder mit der Hubstange (6) oder dem Ventilkörper (26) kraftübertragend verbunden ist.

14. Verfahren zur Herstellung der Ventilantriebsvorrichtung (1) nach einem der Ansprüche 1 bis 10, das Verfahren umfassend die folgenden Schritte:
- Anordnen der Anschlaghülse (13) auf die Hubstange (6),
- Anordnen des Mitnehmers (10) in die Kulissenbahn (14) der Anschlaghülse (13),
- Aufbringen des Rotors (3) auf die Anschlaghülse (13) und Einsetzen des Mitnehmers (10) in das Führungselement (4), und
- Befestigen der Übersetzungseinrichtung (8) an der Hubstange (6).

15. Verfahren nach Anspruch 14, **dadurch gekennzeichnet, dass** die Hubstange (6) in axiale Richtung vorgespannt wird.

## Claims

1. Valve drive device (1) comprising
a base element (2),
a lifting rod (6) for driving a valve body (26), wherein the lifting rod (6) is configured to be moved translationally and without rotation with respect to the base element (2) along its longitudinal axis (L) between a first end position and a second end position differing from the first end position,
a rotor (3) rotatable about the longitudinal axis (L) for driving the lifting rod (6), wherein a rotational movement of the rotor (3) is configured to be converted into the translational and rotationally free movement of the lifting rod (6) by a transmission device (8), and
a rotation limiting device (9) for limiting the rotational movement of the rotor (3) between a first end stop and a second end stop, wherein
the lifting rod (6) is located in the first end position when the rotor (3) has rotated into the first end stop, and the lifting rod (6) is located in the second end position when the rotor (3) has rotated into the second end stop,
**characterized in that**
the rotation limiting device (9) comprises a stop sleeve (13) and a driver (10), wherein the driver (10) is arranged between the stop sleeve (13) and the rotor (3), the driver (10) is connected to the rotor (3) in a rotationally fixed and displaceable manner, and the stop sleeve (13) comprises a slotted guide track (14) for guiding the driver (10).

2. Valve drive device (1) according to claim 1, **characterized in that** the rotation limiting device (9) is arranged at least in sections radially between the lifting rod (6) and the rotor (3).

3. Valve drive device (1) according to claim 1 or 2, **characterized in that** a rotational movement of the rotor (3) causes a rotational movement of the driver (10) about the stop sleeve (13) and the driver (10) is moved within the slotted guide track (14) and/or that the slotted guide track (14) is configured as a helical groove (14) in the stop sleeve (13) and the driver (10) comprises a first projection (11) which is arranged to engage in the helical groove (14) of the stop sleeve (13) and/or that the slotted guide track (14) comprises a first slotted guide track end (15) and a second slotted guide track end (16), wherein the first slotted guide track end (15) defines the first end stop for the rotor (3) and the second slotted guide track end (16) defines the second end stop for the rotor (3).

4. Valve drive device (1) according to one of the preceding claims, **characterized in that** the stop sleeve (13) is connected to the base element (2) in a rotationally fixed manner and/or that the lifting rod (6) is arranged in the base element (2) in a rotationally fixed and displaceable manner.

5. Valve drive device (1) according to one of the preceding claims, **characterized in that** the rotor (3) comprises a guide element (4), wherein the driver (10) is connected to the rotor (3) via the guide element (4) in a rotationally fixed and displaceable manner and/or that the rotor (3) is mounted on the base element (2) via a roller bearing (32).

6. Valve drive device (1) according to one of the preceding claims, **characterized in that** the lifting rod (6) comprises a control end (7) for controlling the valve body (26) in the longitudinal direction and **in that** the transmission device (8) is arranged at an end of the lifting rod (6) opposite the control end (7) and/or that the lifting rod (6) is mounted in a pretensionable manner with respect to a valve body (26) to be controlled.

7. Valve drive device (1) according to one of the preceding claims, **characterized in that** the valve drive device (1) comprises a stepper motor (22), wherein the stepper motor (22) comprises a stator (23) and the rotor (3), and the stator (23) at least partially encloses the rotor (3) and the rotational movement of the rotor (3) is controllable via the stator (23), in particular wherein an axial orientation of the stator (23) with respect to the rotor (3) is configured to be unchangeable during a rotational movement of the rotor (3) between the first end stop and the second end stop.

8. Valve drive device (1) according to one of the preceding claims, **characterized in that** the lifting rod (6) comprises a control end (7) for controlling the valve body (26) in the longitudinal direction and the transmission device (9) is arranged between the control end (7) and the stop sleeve (13), in particular wherein the valve drive device (1) comprises a cover element (30) which is connected to the stop sleeve (13) in a rotationally fixed manner by means of an engagement (31).

9. Valve drive device (1) according to one of the preceding claims, **characterized in that** the valve drive device (1) comprises a deep-drawn cover sleeve (33) which is fixedly connected to the base element (2), wherein the rotor (3) and the rotation limiting device (9) are preferably received completely in the cover sleeve (33), in particular wherein the cover sleeve (33) comprises a sleeve extension (34) for engagement in the stop sleeve (13), wherein the sleeve extension (34) is configured to fix the stop sleeve (13) at least in a rotationally fixed manner with respect to the cover sleeve (33).

10. Valve drive device (1) according to one of the preceding claims, **characterized in that** the base element (2) comprises a guide means (35), wherein the guide means (35) is configured to axially guide the lifting rod (6) along a longitudinal contour (36).

11. Valve (24) for blocking and/or controlling the flow of fluids, the valve (24) comprising:
- a valve body (26) which is configured to be convertible within a valve housing (25) between a completely closed position and a completely open position, and
- a valve drive device (1) according to one of the preceding claims, wherein the position of the valve body (26) is controllable by the lifting rod (6) of the valve drive device (1).

12. Valve (24) according to claim 11, **characterized in that** the valve body (26) comprises at least one sealing element (37), wherein the sealing element (37) is configured to abut in a fluid-tight manner against a sealing seat (27) of the valve housing (25) when the valve body (26) is in the completely closed position and/or that the valve housing (25) comprises a first sealing seat (27.1) and a second sealing seat (27.2), and the valve body (26) is configured to be convertible back and forth between the first sealing seat (27.1) and the second sealing seat (27.2) and/or that the valve (24) comprises a spring element (28), wherein the spring element (28) is arranged with respect to the longitudinal axis (L) in the axial direction between the lifting rod (6) and the valve body (26).

13. Valve (24) according to claim 12, **characterized in that** the spring element (28) is configured to press the valve body (26) into the first sealing seat (27.1) and/or the second sealing seat (27.2) and/or that the spring element (28) is connected via a force transmission means (41) and depending on the position of the lifting rod (6) either to the lifting rod (6) or to the valve body (26) in a force-transmitting manner.

14. Method for manufacturing the valve drive device (1) according to one of claims 1 to 10, the method comprising the following steps:
- arranging the stop sleeve (13) on the lifting rod (6),
- arranging the driver (10) in the slotted guide track (14) of the stop sleeve (13),
- mounting the rotor (3) on the stop sleeve (13) and inserting the driver (10) into the guide element (4), and
- fastening the transmission device (8) to the lifting rod (6).

15. Method according to claim 14, **characterized in that** the lifting rod (6) is pretensioned in the axial direction.

## Revendications

1. Dispositif d'entraînement de soupape (1) comprenant
un élément de base (2),
une barre de levage (6) pour l'entraînement d'un corps de soupape (26), dans lequel la barre de levage (6) est configurée de manière à pouvoir être déplacée par translation et sans rotation par rapport à l'élément de base (2) le long de son axe longitudinal (L) entre une première position finale et une deuxième position finale différente de la première position finale,
un rotor (3) configuré de manière à pouvoir tourner autour de l'axe longitudinal (L) afin d'entraîner la barre de levage (6), dans lequel un mouvement de rotation du rotor (3) est transformable par un dispositif de transmission (8) en mouvement de translation sans rotation de la barre de levage (6), et
un dispositif de limitation de rotation (9) pour limiter le mouvement de rotation du rotor (3) entre une première butée finale et une deuxième butée finale, dans lequel
la barre de levage (6) se trouve dans la première position finale lorsque le rotor (3) a tourné dans la première butée finale, et la barre de levage (6) se trouve dans la deuxième position finale lorsque le rotor (3) a tourné dans la deuxième butée finale,
**caractérisé en ce que**
le dispositif de limitation de rotation (9) présente une douille de butée (13) et un élément d'entraînement (10), dans lequel l'élément d'entraînement (10) est disposé entre la douille de butée (13) et le rotor (3), l'élément d'entraînement (10) est connecté de manière solidaire en rotation et mobile en translation au rotor (3), et la douille de butée (13) présente une piste de coulisse (14) pour guider l'élément d'entraînement (10).

2. Dispositif d'entraînement de soupape (1) selon la revendication 1, **caractérisé en ce que** le dispositif de limitation de rotation (9) est disposé au moins en partie radialement entre la barre de levage (6) et le rotor (3).

3. Dispositif d'entraînement de soupape (1) selon la revendication 1 ou 2, **caractérisé en ce qu'**un mouvement de rotation du rotor (3) provoque un mouvement de rotation de l'élément d'entraînement (10) autour de la douille de butée (13) et l'élément d'entraînement (10) est déplacé à l'intérieur de la piste de coulisse (14) et/ou **en ce que** la piste de coulisse (14) est réalisée sous forme de rainure hélicoïdale (14) dans la douille de butée (13) et l'élément d'entraînement (10) présente une première saillie (11) qui est disposée de manière à s'engager dans la rainure hélicoïdale (14) de la douille de butée (13) et/ou **en ce que** la piste de coulisse (14) présente une première extrémité de piste de coulisse (15) et une deuxième extrémité de piste de coulisse (16), dans lequel la première extrémité de piste de coulisse (15) définit la première butée finale pour le rotor (3) et la deuxième extrémité de piste de coulisse (16) définit la deuxième butée finale pour le rotor (3).

4. Dispositif d'entraînement de soupape (1) selon l'une des revendications précédentes, **caractérisé en ce que** la douille de butée (13) est connectée de manière solidaire en rotation à l'élément de base (2) et/ou **en ce que** la barre de levage (6) est disposée de manière solidaire en rotation et mobile en translation dans l'élément de base (2).

5. Dispositif d'entraînement de soupape (1) selon l'une des revendications précédentes, **caractérisé en ce que** le rotor (3) présente un élément de guidage (4), dans lequel l'élément d'entraînement (10) est connecté par le biais de l'élément de guidage (4) de manière solidaire en rotation et mobile en translation au rotor (3) et/ou **en ce que** le rotor (3) est supporté par le biais d'un roulement mécanique (32) sur l'élément de base (2).

6. Dispositif d'entraînement de soupape (1) selon l'une des revendications précédentes, **caractérisé en ce que** la barre de levage (6) présente dans la direction longitudinale une extrémité de commande (7) pour commander le corps de soupape (26) et le dispositif de transmission (8) est disposé au niveau d'une extrémité de la barre de levage (6) opposée à l'extrémité de commande (7) et/ou **en ce que** la barre de levage (6) est supportée de manière à pouvoir être précontrainte par rapport à un corps de soupape (26) à commander.

7. Dispositif d'entraînement de soupape (1) selon l'une des revendications précédentes, **caractérisé en ce que** le dispositif d'entraînement de soupape (1) présente un moteur pas à pas (22), dans lequel le moteur pas à pas (22) comprend un stator (23) et le rotor (3), et le stator (23) enveloppe le rotor (3) au moins en partie, et le mouvement de rotation du rotor (3) est configuré de manière à pouvoir être commandé par le biais du stator (23), en particulier dans lequel une orientation axiale du stator (23) par rapport au rotor (3) est réalisée de manière invariable pendant un mouvement de rotation du rotor (3) entre la première butée finale et la deuxième butée finale.

8. Dispositif d'entraînement de soupape (1) selon l'une des revendications précédentes, **caractérisé en ce que** la barre de levage (6) présente dans la direction longitudinale une extrémité de commande (7) pour commander le corps de soupape (26) et le dispositif de transmission (9) est disposé entre l'extrémité de commande (7) et la douille de butée (13), en particulier dans lequel le dispositif d'entraînement de soupape (1) présente un élément de couvercle (30) qui est connecté de manière solidaire en rotation à la douille de butée (13) au moyen d'un engagement (31).

9. Dispositif d'entraînement de soupape (1) selon l'une des revendications précédentes, **caractérisé en ce que** le dispositif d'entraînement de soupape (1) comprend une douille de recouvrement emboutie (33) qui est connectée de manière fixe à l'élément de base (2), dans lequel le rotor (3) et le dispositif de limitation de rotation (9) sont reçus de préférence complètement dans la douille de recouvrement (33), en particulier dans lequel la douille de recouvrement (33) présente un prolongement de douille (34) pour l'engagement dans la douille de butée (13), dans lequel le prolongement de douille (34) est réalisé de manière à fixer au moins de manière solidaire en rotation la douille de butée (13) par rapport à la douille de recouvrement (33).

10. Dispositif d'entraînement de soupape (1) selon l'une des revendications précédentes, **caractérisé en ce que** l'élément de base (2) comprend un moyen de guidage (35), dans lequel le moyen de guidage (35) est réalisé de manière à guider axialement la barre de levage (6) le long d'un contour longitudinal (36).

11. Soupape (24) pour l'arrêt et/ou le contrôle du débit de fluides, la soupape (24) comprenant :
- un corps de soupape (26) qui est réalisé de manière à pouvoir être transféré à l'intérieur d'un boîtier de soupape (25) entre une position complètement fermée et une position complètement ouverte, et
- un dispositif d'entraînement de soupape (1) selon l'une des revendications précédentes, dans lequel la position du corps de soupape (26) est configurée de manière à pouvoir être commandée par la barre de levage (6) du dispositif d'entraînement de soupape (1).

12. Soupape (24) selon la revendication 11, **caractérisée en ce que** le corps de soupape (26) présente au moins un élément d'étanchéité (37), dans lequel l'élément d'étanchéité (37) est réalisé de manière à s'appliquer de manière étanche aux fluides contre un siège d'étanchéité (27) du boîtier de soupape (25) lorsque le corps de soupape (26) se trouve dans la position complètement fermée et/ou **en ce que** le boîtier de soupape (25) présente un premier siège d'étanchéité (27.1) et un deuxième siège d'étanchéité (27.2), et le corps de soupape (26) est configuré de manière à pouvoir être transféré en va-et-vient entre le premier siège d'étanchéité (27.1) et le deuxième siège d'étanchéité (27.2) et/ou **en ce que** la soupape (24) présente un élément de ressort (28), dans lequel l'élément de ressort (28) est disposé par rapport à l'axe longitudinal (L) dans la direction axiale entre la barre de levage (6) et le corps de soupape (26).

13. Soupape (24) selon la revendication 12, **caractérisée en ce que** l'élément de ressort (28) est réalisé de manière à presser le corps de soupape (26) dans le premier siège d'étanchéité (27.1) et/ou le deuxième siège d'étanchéité (27.2) et/ou **en ce que** l'élément de ressort (28) est connecté de manière à transmettre des forces par le biais d'un moyen de transmission de force (41) et en fonction de la position de la barre de levage (6) soit à la barre de levage (6) soit au corps de soupape (26).

14. Procédé de fabrication du dispositif d'entraînement de soupape (1) selon l'une des revendications 1 à 10, le procédé comprenant les étapes suivantes :
- disposition de la douille de butée (13) sur la barre de levage (6),
- disposition de l'élément d'entraînement (10) dans la piste de coulisse (14) de la douille de butée (13),
- placement du rotor (3) sur la douille de butée (13) et insertion de l'élément d'entraînement (10) dans l'élément de guidage (4), et
- fixation du dispositif de transmission (8) sur la barre de levage (6).

15. Procédé selon la revendication 14, **caractérisé en ce que** la barre de levage (6) est précontrainte dans la direction axiale.
